Europäisches Patentamt

European Patent Office

Office européen des brevets

(11) Veröffentlichungsnummer: **0 169 394**
**A1**

(12) # EUROPÄISCHE PATENTANMELDUNG

(21) Anmeldenummer: 85107863.4

(22) Anmeldetag: 25.06.85

(51) Int. Cl.⁴: **F 16 J 15/32**

(30) Priorität: 07.07.84 DE 3425162

(43) Veröffentlichungstag der Anmeldung:
29.01.86 Patentblatt 86/5

(84) Benannte Vertragsstaaten:
DE FR GB IT SE

(71) Anmelder: MTU MOTOREN- UND TURBINEN-UNION
MÜNCHEN GMBH
Dachauer Strasse 665 Postfach 50 06 40
D-8000 München 50(DE)

(72) Erfinder: Popp, Joachim, Dipl.-Ing.
Adam-Stegerwald-Strasse 8
D-8060 Dachau(DE)

(54) Dichtung zwischen zwei Maschinenteilen.

(57) Die Dichtung ist ausgeführt als Bürstendichtung (3) unter
einem Winkel zu einer Hauptsache wenigstens eines maschinenteils (1-2). Die Erfindung ist auch bei räumlich beengten
Konstruktionen und engegen Toleranzen anwendbar insbesondere in Strömungsmaschinen wie Fluggastriebwerken
zur Abdichtung zwischen rotierenden Teilen und/oder feststehenden Teilen.

FIG.1

EP 0 169 394 A1

MTU MOTOREN- UND TURBINEN-UNION
MÜNCHEN GMBH

## Dichtung zwischen zwei Maschinenteilen

Die Erfindung betrifft eine Dichtung zwischen zwei
Maschinenteilen wobei Räume unterschiedlichen Drucks
voneinander zu trennen sind. Bei solchen Maschinen, wie
Strömungsmaschinen, werden hauptsächlich Labyrinthe,
rotierende Flüssigkeitsringe, Gleitdichtungen u.ä.
verwendet. In jüngster Zeit sind auch Bürstendichtungen
vorgeschlagen worden.

Eine Bürstendichtung wie sie z.B. in der DE-OS 29 21 512
beschrieben ist, weist eine Bürste auf, die radial nach
innen gerichtet, aus einem Bürstenträger herausragt. Es
sind auch Vorschläge gemacht worden, die Bürste radial
nach außen aus dem Bürstenträger herausragen zu lassen.
Grundsätzlich erfolgt jedoch bei den bekannten Vorschlägen die Abdichtung mittels Bürstendichtung durch
zwei radial übereinanderliegende Elemente von denen eines
die Bürste und das andere den Anlaufpartner darstellt.

Bei räumlich beengten Konstruktion und Toleranzgrenzen
oder komplizierten Antrieben mit gegebenenfalls mehreren
konzentrischen Wellen die u.U. noch gegeneinander zu bewegen sind, lassen sich die vorbeschriebenen Radialdichtungen nicht unterbringen oder u.U. gar nicht anwenden.

ESP-778

Aufgabe der Erfindung ist es eine Dichtung zwischen zwei Maschinenteilen und Räumen unterschiedlichen Drucks zu schaffen, die einerseits gute Lauf- und gute Dichteigenschaften aufweisen und andererseits auch bei Konstruktionen mit räumlich sehr beengten Verhältnissen anwendbar ist. ·

Gelöst wird diese Aufgabe durch die im Anspruch 1 enthaltenen Merkmale.

Weitere Erfindungsmerkmale sind in den Unteransprüchen sowie der Beschreibung und Zeichnung im Ausführungsbeispiel zu entnehmen.

Zur Erfindung gehören auch alle Kombinationen und Unterkombinationen dieser Merkmale auch in Verbindung mit an sich bekannten Merkmalen.

Die wesentlichsten Vorteile der Erfindung sind ihre Anwendbarkeit auch bei geringen Toleranzen zwischen zwei Partnern, wie überhaupt ihre verbesserte Unterbringungsmöglichkeit; ferner ihre Anwendbarkeit auch bei ineinander drehenden Wellen (konzentrische Achsen), gleichgültig ob diese gleichsinnig oder gegensinnit rotieren, d.h. auch die Art des Antriebs spielt eine untergeordnete Rolle. Selbstverständlich ist die Erfindung nicht auf die Abdichtung zwischen drehenden Teilen beschränkt, sondern auch zwischen feststehenden und/oder drehenden Teilen. Dabei kann es sich sowohl um Innen- als auch um Außenteile handeln und die Dichtung kann erfindungsgemäß in einem Endbereich eines Teiles befestigt sein oder kann Bestandteil eines oder mehrerer dieser Teile sein. Ein bevorzugtes Anwendungsgebiet der Erfindung liegt bei Strömungsmaschinen, hier bei Fluggastriebwerken, insbesondere solchen mit mehreren konzentrisch angeordneten Wellen.

ESP-778

Ausführungsbeispiele der Erfindung sind in der beigefügten Zeichnung rein schematisch dargestellt. Abwandlungen der selben können selbstverständlich vorgenommen werden, ohne hierdurch den Erfindungsgedanken zu verlassen.

Es zeigen:

Fig. 1 eine Gehäusedichtung gegenüber einer Welle mit Bund

Fig. 2 eine Dichtung in einem Endbereich einer Welle angeordnet gegenüber einem feststehenden Gehäuse

Fig. 3 eine Dichtung zwischen zwei gegensinnig rotierenden Wellen

Fig. 4 eine Dichtung zwischen zwei gleichsinnig rotierenden Wellen

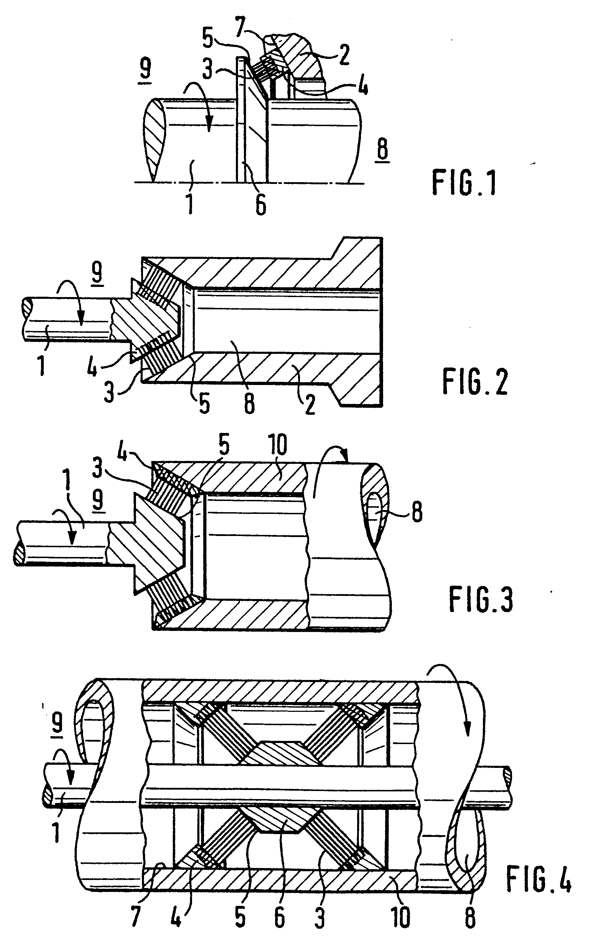

Wie Fig. 1 zeigt, ist eine Welle 1 in Pfeilrichtung gegenüber einem Gehäuse 2 relativ beweglich d.h. hier drehbar. Die Bürstendichtung 3 ist in einem Halter 4 eingespannt unter einem Winkel zur Mittelachse der Welle. Senkrecht hierzu angeordnet ist eine Anlauffläche 5 an einem Bund 6 der Welle 1. Die feststehende Wand 7 des Gehäuses 2 weist den gleichen Winkel zur Achse der Welle 1 auf wie die Anlauffläche 5. D.h., die freien Enden der Borsten einer Bürste 3 stehen senkrecht über der Anlauffläche 5 und dichten den Raum 8 (Hohlraum im Gehäuse 2) von dem Raum 9 des Bundes 6 ab.

Die Bürstendichtung kann im wesentlichen bekannter Art sein d.h., einzelne Borsten büschelartig zusammengefaßt

ESP-778

in einzelne Halter die auf einem Ring 4 angeordnet sind welche die Welle 1 umgibt. Auch andere Befestigungsarten der Borsten in ihrem Halter sind anwendbar.

Fig. 2 zeigt eine Welle 1 drehbar gegenüber einem Gehäuse 2 mit Hohlraum 8. Dieser ist gegenüber dem Raum unterschiedlichen Drucks 9 durch eine Bürstendichtung 3 am inneren Ende der Welle 1 abgedichtet, die unter einem Winkel zur Anlauffläche 5 angeordnet ist; die wiederum einen Winkel zur Mittelachse von Welle 1 und Gehäuse 2 (identisch) aufweist. Die Borsten stehen bei allen Ausführungsbeispielen immer senkrecht auf der Anlauffläche.

Die Fig. 3 unterscheidet sich im wesentlichen von der Fig. 2 nur dadurch, daß anstelle des Gehäuses eine kontrarotierende Hohlwelle 8 (relativ zur Welle 1) vorgesehen ist. Ferner ist die Bürste 3 an der Hohlwelle befestigt und die Anlauffläche 5 an einem etwa kegelstumpfförmigen Endbereich 4 der Welle 1 senkrecht zu den Borsten 3 und in einem Winkel zur Mittelachse beider Wellen 1 und 10 angeordnet.

Aus Fig. 4 ist ein Ausführungsbeispiel der Erfindung ersichtlich, mit einer Welle 1 in einer Hohlwelle 10 die gleichsinnig rotieren und wobei die Bürstendichtungen 3 in Haltern 4 auf der Innenseite der Hohlwelle 10 angeordnet sind, so daß ihre Borsten auf Anlaufflächen 5 an einem Bund 6 der Welle 1 rotieren.

ESP-778

MTU MOTOREN- UND TURBINEN-UNION
MÜNCHEN GMBH


P a t e n t a n s p r ü c h e

1. Dichtung zwischen zwei Maschinenteilen um Räume unterschiedlichen Druckes voneinander zu trennen, insbesondere als Bürstendichtung, dadurch gekennzeichnet, daß ihre Borsten unter einem Winkel zu
wenigstens einer Hauptachse eines Maschinenteils gehalten sind, mit einer Anlauffläche eines Partners in
Kontakt stehen, die den gleichen Winkel und/oder einen
kongruenten Winkel zu einer Hauptachse eines Maschinenteiles aufweist und die Borsten in ihrem Halter senkrecht zur Anlauffläche stehen.

2. Dichtung nach Anspruch 1, dadurch gekennzeichnet,
daß die Achse zugleich die Drehachse eines oder
beider Partner (Maschinenteile) ist.

3. Dichtung nach Anspruch 1 oder 2, dadurch gekennzeichnet,
daß die Achse zugleich die Hauptachse eines oder beider
feststehender Partner ist.

4. Dichtung nach einem der vorhergehenden Ansprüche, dadurch gekennzeichnet, daß der eine Partner gegenüber
dem anderen relativ beweglich angeordnet ist.

ESP-778

5. Dichtung nach einem der vorhergehenden Ansprüche, dadurch gekennzeichnet, daß die Bürste an einem oder beiden axialen Endbereichen einer Welle angeordnet ist.

6. Dichtung nach einem der vorhergehenden Ansprüche, dadurch gekennzeichnet, daß die Bürste innen oder außen an einer (Hohl-)-Welle angeordnet ist.

7. Dichtung nach einem der vorhergehenden Ansprüche, dadurch gekennzeichnet, daß die Bürste ringförmig an einem Gehäuse angeordnet ist.

8. Dichtung nach einem der vorhergehenden Ansprüche, dadurch gekennzeichnet, daß die Bürste feststehend angeordnet ist und eine (Hohl)-Welle umgibt.

9. Dichtung nach einem der vorhergehenden Ansprüche dadurch gekennzeichnet, daß die Bürste zwischen zwei gleich-oder gegensinnig rotierenden Wellen angeordnet ist.

ESP-778

1/1

FIG.1

FIG.2

FIG.3

FIG.4

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 168 653 (WETTICH) <br><br> * Seite 1, Zeile 32 - Seite 2, Zeile 25; Figuren 2,3 * | 1-4,7, 8 | F 16 J 15/32 |
| X | FR-A-2 199 081 (SKF) <br> * Seite 2, Zeile 11 - Seite 6, Zeile 32; Figuren 1-6 * | 1-4 | |

RECHERCHIERTE
SACHGEBIETE (Int. Cl.4)

F 16 J

Der vorliegende Recherchenbericht wurde für alle Patentansprüche erstellt.

| Recherchenort | Abschlußdatum der Recherche | Prüfer |
|---|---|---|
| DEN HAAG | 10-10-1985 | LEGER M.G.M. |